# EUROPÄISCHE PATENTANMELDUNG

(11) **EP 3 786 498 A1**
(43) Veröffentlichungstag der Anmeldung: **03.03.2021**
(21) Anmeldenummer: 19193645.9
(22) Anmeldetag: 26.08.2019
(51) Int. Cl.: F16K 5/06, F16K 27/06, F16L 9/18, F02M 21/02, F02D 19/02, F02D 19/06

(54) **ABSPERRVENTIL FÜR EINE DOPPELWANDIGE LEITUNG, GASZUFÜHRSYSTEM UND GROSSMOTOR**

(71) Anmelder: Winterthur Gas & Diesel AG, 8401 Winterthur (CH)
(72) Erfinder: Gubler, Aaron, 8400 Winterthur (CH)
(74) Vertreter: Intellectual Property Services GmbH

(57) **Zusammenfassung**

Es wird ein Absperrventil für eine doppelwandige Leitung (101, 102, 103) eines Gaszuführsystems (100) vorgeschlagen, mit einem Ventilgehäuse (2), welches einen zentral angeordneten ersten Fluidkanal (6) für ein erstes Fluid aufweist, der sich in einer axialen Richtung (A) vollständig durch das Ventilgehäuse (2) hindurch erstreckt, ferner mit einem Ventilkörper (3), welcher in einer Schliessstellung den Durchgang durch den ersten Fluidkanal (6) versperrt, und welcher in einer Offenstellung den Durchgang durch den ersten Fluidkanal (6) öffnet, sowie mit einem Betätigungsorgan (4), mit welchem der Ventilkörper (3) aus der Schliessstellung in die Offenstellung und aus der Offenstellung in die Schliessstellung bewegbar ist, wobei eine Mehrzahl von zweiten Fluidkanälen (7) für ein zweites Fluid vorgesehen ist, durch welche das zweite Fluid das Ventilgehäuse (2) durchströmen kann, und wobei jeder zweite Fluidkanal (7) jeweils als Bohrung im Ventilgehäuse (2) ausgestaltet ist. Ferner werden ein Gaszuführsystem für einen Grossmotor sowie ein Grossmotor vorgeschlagen.

## Beschreibung

Die Erfindung betrifft ein Absperrventil für eine doppelwandige Leitung eines Gaszuführsystems, sowie ein Gaszuführsystem für einen Grossmotor, sowie einen Grossmotor gemäss dem Oberbegriff des unabhängigen Patentanspruchs der jeweiligen Kategorie.

Grossmotoren werden klassischerweise als Grossdieselmotoren mit Schweröl betrieben. Grossdieselmotoren, die als Zweitakt- oder als Viertakt-Maschinen ausgestaltet sein können, beispielsweise als längsgespülte Zweitakt-Grossdieselmotoren, werden häufig als Antriebsaggregate für Schiffe oder auch im stationären Betrieb, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit den Betriebsstoffen zentrale Kriterien. Grossdieselmotoren haben typischerweise Zylinder, deren Innendurchmesser (Bohrung) mindestens 200 mm beträgt. Heutzutage werden Grossmotoren mit einer Bohrung von bis zu 960 mm oder sogar noch mehr eingesetzt.

Unter den Aspekten des wirtschaftlichen und effizienten Betriebs, der Einhaltung von Abgasgrenzwerten und der Verfügbarkeit von Ressourcen sucht man heute auch bei Grossmotoren nach Alternativen zu dem Brennstoff Schweröl. Dabei werden sowohl flüssige Brennstoffe eingesetzt, also Brennstoffe, die im flüssigen Zustand in den Brennraum eingebracht werden, als auch gasförmige Brennstoffe, also Brennstoffe, die im gasförmigen Zustand in den Brennraum eingebracht werden.

Beispiele für flüssige Brennstoffe als bekannte Alternativen zum Schweröl sind andere schwere Kohlenwasserstoffe, die insbesondere als Rückstände bei der Raffinerie von Erdöl übrig bleiben, Alkohole, insbesondere Methanol oder Ethanol, Benzin, Diesel, oder auch Emulsionen oder Suspensionen. So ist es z. B. bekannt, die als MSAR (Multiphase Superfine Atomised Residue) bezeichneten Emulsionen als Brennstoff zu verwenden. Eine bekannte Suspension ist diejenige aus Kohlenstaub und Wasser, die ebenfalls als Brennstoff für Grossmotoren eingesetzt wird. Als gasförmige Brennstoffe sind beispielsweise Erdgase wie LNG (liquefied natural gas) bekannt.

Es sind insbesondere auch solche Grossmotoren bekannt, die mit mindestens zwei verschiedenen Brennstoffen betreibbar sind, wobei der Motor je nach Betriebssituation oder Umgebung entweder mit dem einen Brennstoff oder mit dem anderen Brennstoff betrieben wird.

Grossmotoren, die mit mindestens zwei oder auch mehr verschiedenen flüssigen oder gasförmigen Brennstoffen betrieben werden können, werden häufig, je nach aktuell verwendetem Brennstoff in unterschiedlichen Betriebsmodi betrieben. In dem häufig als Dieselbetrieb bezeichneten Betriebsmodus erfolgt die Verbrennung des Brennstoffs in der Regel nach dem Prinzip der Kompressionszündung oder Selbstzündung des Brennstoffs. In dem häufig als Ottobetrieb bezeichneten Modus erfolgt die Verbrennung durch die Fremdzündung eines zündfähigen vorgemischten Luft-BrennstoffGemisches. Diese Fremdzündung kann beispielsweise durch einen elektrischen Funken erfolgen, z. B. mit einer Zündkerze, oder auch durch die Selbstzündung einer kleinen eingespritzten Brennstoffmenge, welche dann die Fremdzündung eines anderen Brennstoffs bewirkt. Häufig wird dabei die für die Selbstzündung vorgesehene kleine Brennstoffmenge in eine mit dem Brennraum verbundene Vorkammer eingespritzt.

Ferner sind auch Mischformen aus dem Ottobetrieb und dem Dieselbetrieb bekannt.

Ein Beispiel für einen Grossmotor, der mit zwei unterschiedlichen Brennstoffen betreibbar ist, ist ein längsgespülter Grossdieselmotor, der als Dual-Fuel Grossdieselmotor ausgestaltet ist. Dieser ist in einem Flüssigmodus betreibbar, in welchem ein flüssiger Brennstoff zur Verbrennung in den Zylinder eingebracht wird, sowie in einem Gasmodus, in welchem ein Gas als Brennstoff in den Zylinder eingebracht wird.

Im Rahmen dieser Anmeldung sind mit dem Begriff "Grossdieselmotor" solche Motoren gemeint, die zumindest in einem Dieselbetrieb betrieben werden können. Insbesondere umfasst der Begriff "Grossdieselmotor" also auch solche Dual-Fuel oder Multi-Fuel Grossmotoren, die ausser im Dieselbetrieb auch noch in einem anderen Betrieb, beispielsweise dem Otto-Betrieb, betreibbar sind.

Natürlich kann ein Grossmotor auch als Gasmotor ausgestaltet sein, der nur mit einem Gas oder mehreren Gasen als Brennstoff betrieben werden kann.

Für den Betrieb mit Gasen als Brennstoff muss der Grossmotor ein Gaszuführsystem aufweisen, mit welchem das als Brennstoff verwendete Gas den Zylindern zuführbar ist. Für solche Gaszuführsysteme werden aus Sicherheitsgründen doppelwandige Leitungen für das Gas verwendet. Solche Leitungen umfassen einen inneren Kanal, durch welchen das Gas strömt, sowie einen ringförmigen äusseren Kanal, der koaxial zum inneren Kanal ausgestaltet ist. In dem äusseren Kanal strömt ein zweites Fluid als Schutzmedium, beispielsweise Luft. Dabei wird üblicherweise das zweite Fluid in dem äusseren Kanal im Gegenstrom zu dem ersten Fluid, hier also dem Gas, im inneren Kanal geführt. Ausserdem wird die doppelwandige Leitung so betrieben, dass in dem äusseren Kanal ein geringerer Druck herrscht als in dem inneren Kanal. Kommt es nun in dem gasführenden Leitungssystem, also beispielsweise in einem inneren Kanal zu einer Leckage, so tritt das Gas aus dem inneren Kanal aus und gelangt in den äusseren Kanal, wo es von dem Schutzmedium entgegen der Strömungsrichtung des Gases im inneren Kanal abtransportiert wird. Damit diese Schutzfunktion auch immer gewährleistet ist, muss sichergestellt sein, dass das Gas führende innere System stets von dem das Schutzmedium führenden äusseren System umgeben ist.

Dabei ergeben sich jedoch Schwierigkeiten beispielsweise an Absperrventilen, mit denen der Gasstrom abgesperrt werden kann, weil auch an solchen Absperrventilen gewährleistet sein muss, dass die Komponenten, welche von dem als Brennstoff dienenden Gas durchströmt werden, durch das Schutzmedium gegen ein Austreten des Gases in die Umwelt geschützt sind.

Dazu wird in der WO 2019/052624 ein Absperrventil vorgeschlagen, das zwei Flansche aufweist, mit welchem das Absperrventil zwischen zwei Endflanschen von zwei doppelwandigen Leitungen montiert werden kann. Das Absperrventil hat einen inneren Kanal für das Gas, der sich durch beide Flansche hindurch erstreckt. Dieser innere Kanal wird durch eine erste zylindrische Hülse begrenzt, die zwischen den beiden Flanschen angeordnet ist. Koaxial um die erste Hülse herum ist eine zweite Hülse zwischen den beiden Flanschen angeordnet, sodass zwischen der ersten Hülse und der zweiten Hülse ein ringförmiger Kanal ausgebildet ist, der sich zwischen den beiden Flanschen erstreckt, und durch welchen das Schutzmedium geführt wird. In den beiden Flanschen sind dann jeweils mehrere Öffnungen vorgesehen, durch welche das Schutzmedium in den ringförmigen Kanal einströmen bzw. aus diesem herausströmen kann. Ein Schliesskörper ist drehbar in dem inneren Kanal angeordnet, um den Durchgang durch den inneren Kanal wahlweise zu öffnen oder zu schliessen. Der Schliesskörper kann mittels eines Betätigungsorgans gedreht werden, welches sich in radialer Richtung durch die erste Hülse und durch die zweite Hülse hindurch erstreckt, und welches in den Schliesskörper eingreift.

Dieses Absperrventil ist konstruktiv sehr aufwendig. So müssen beispielsweise immer vier Flansche vorgesehen sein, um das Absperrventil in ein Leitungssystem einzubauen, nämlich zwei Flansche an dem Absperrventil und jeweils ein Flansch an dem Ende der Leitungen, zwischen denen das Absperrventil montiert wird.

Ausgehend von diesem Stand der Technik ist es daher eine Aufgabe der Erfindung, ein Absperrventil für eine doppelwandige Leitung eines Gaszuführsystems vorzuschlagen, das konstruktiv einfach ist und gleichzeitig sicherstellt, dass das in dem inneren Kanal der doppelwandigen Leitung strömende Fluid nicht in die Umgebung austreten kann. Ferner ist es eine Aufgabe der Erfindung, ein Gaszuführsystem für einen Grossmotor vorzuschlagen, welches ein solches Absperrventil umfasst. Eine weitere Aufgabe der Erfindung ist es, einen Grossmotor mit einem solchen Gaszuführsystem vorzuschlagen.

Die diese Aufgabe lösenden Gegenstände der Erfindung sind durch die Merkmale des unabhängigen Patentanspruchs der jeweiligen Kategorie gekennzeichnet.

Erfindungsgemäss wird also ein Absperrventil für eine doppelwandige Leitung eines Gaszuführsystems vorgeschlagen mit einem Ventilgehäuse, welches einen zentral angeordneten ersten Fluidkanal für ein erstes Fluid aufweist, der sich in einer axialen Richtung vollständig durch das Ventilgehäuse hindurch erstreckt, ferner mit einem Ventilkörper, welcher in einer Schliessstellung den Durchgang durch den ersten Fluidkanal versperrt, und welcher in einer Offenstellung den Durchgang durch den ersten Fluidkanal öffnet, sowie mit einem Betätigungsorgan, mit welchem der Ventilkörper aus der Schliessstellung in die Offenstellung und aus der Offenstellung in die Schliessstellung bewegbar ist, wobei eine Mehrzahl von zweiten Fluidkanälen für ein zweites Fluid vorgesehen ist, durch welche das zweite Fluid das Ventilgehäuse durchströmen kann, und wobei jeder zweite Fluidkanal jeweils als Bohrung im Ventilgehäuse ausgestaltet ist.

Das erfindungsgemässe Absperrventil ist konstruktiv besonders einfach, weil für das zweite Fluid, beispielsweise also das Schutzmedium, eine Mehrzahl von zweiten Fluidkanälen vorgesehen ist, von denen jeder jeweils als Bohrung in dem massiven Ventilgehäuse ausgestaltet ist. Dies stellt eine fertigungstechnisch besonders einfache Ausführung dar, weil für die zweiten Fluidkanäle jeweils nur Bohrungen durchzuführen sind. Zudem ist es dadurch möglich, dass Ventilgehäuse einstückig auszugestalten, woraus der Vorteil resultiert, dass keine Verbindungsstellen zwischen verschiedenen Teilen des Ventilgehäuses vorhanden sind, die potenzielle Leckagestellen darstellen. Zudem ist gewährleistet, dass das zweite Fluid das Ventilgehäuse durchströmen kann, sodass das erste Fluid, also beispielsweise das als Brennstoff dienende Gas, zuverlässig gegen ein Austreten in die Umgebung gesichert ist.

Vorzugsweise verläuft jeder zweite Fluidkanal parallel zum ersten Fluidkanal, wobei die zweiten Fluidkanäle radial aussenliegend um den ersten Fluidkanal herum angeordnet sind. Diese Ausführungsform ist fertigungstechnisch besonders einfach. Zudem ist der erste Fluidkanal vollumfänglich von den zweiten Fluidkanälen umgeben, sodass ein Austreten des ersten Fluids in die Umgebung noch zuverlässiger verhindert wird.

Um das Absperrventil in einfacher und sicherer Weise in ein Leitungssystem zu integrieren, ist es bevorzugt, dass das Ventilgehäuse zwei ringförmige Mantelflächen umfasst, auf welchen jeweils ein Verbindungsflansch das Ventilgehäuse umfassen kann. Durch diese Massnahme ist es zudem möglich, die Anzahl der benötigten Flansche zu reduzieren. An dem Absperrventil selbst brauchen keine Flansche mehr vorgesehen zu werden. Die an den Leitungsenden vorgesehenen Flansche können das Ventilgehäuse direkt umgreifen. Durch eine Schraubverbindung kann dann das Absperrventil zwischen den Enden zweier doppelwandiger Leitungen verspannt werden.

Vorzugsweise ist in jeder Mantelfläche ein Dichtelement angeordnet. Dadurch wird es vermieden, dass das zweite Fluid entlang dieser Mantelfläche austreten kann. Das Dichtelement ist beispielsweise ein O-Ring, welcher in eine Nut in der Mantelfläche oder in einer Nut in dem Verbindungsflansch eingelegt ist.

Gemäss einer bevorzugten Ausgestaltung erstreckt sich das Betätigungsorgan senkrecht zur axialen Richtung und greift in den Ventilkörper ein. Der Ventilkörper ist beispielsweise sphärisch ausgestaltet mit einer Bohrung, die sich diametral durch den sphärischen Ventilkörper erstreckt. Mittels des Betätigungsorgans, welches in den Ventilkörper eingreift, kann dieser dann um 90° in die Offenstellung gedreht werden, sodass die Bohrung in dem Ventilkörper die Strömungsverbindung für das erste Fluid durch das Absperrventil freigibt. Umgekehrt kann der Ventilkörper durch eine Drehung um 90° aus der Offenstellung in die Schliessstellung bewegt werden, in welcher die Bohrung in dem Ventilkörper senkrecht zur axialen Richtung verläuft, sodass das erste Fluid das Absperrventil nicht mehr durchströmen kann.

Gemäss einer bevorzugten Ausführungsform umfasst das Betätigungsorgan eine ringförmige Nut, durch welche das zweite Fluid das Betätigungsorgan umströmen kann. Da sich das Betätigungsorgan vorzugsweise in einer radialen Richtung senkrecht zur axialen Richtung durch einen der zweiten Fluidkanäle hindurch erstreckt, kann das Betätigungsorgan somit von dem zweiten Fluid umströmt werden, sodass der Durchfluss durch diesen zweiten Fluidkanal nicht versperrt ist.

In einer bevorzugten Ausgestaltung weist das Ventilgehäuse zwei axiale Endflächen auf, wobei in jeder Endfläche jeweils ein ringscheibenförmiges Dichtelement angeordnet ist, welches den ersten Fluidkanal umgibt, und dessen Aussendurchmesser so bemessen ist, dass das ringscheibenförmige Dichtelement bezüglich der radialen Richtung zwischen dem ersten Fluidkanal und den zweiten Fluidkanälen endet. Durch diese Massnahme wird im störungsfreien Betriebszustand in dem Absperrventil ein Eindringen des ersten Fluids in die zweiten Fluidkanäle verhindert.

Durch die Erfindung wird ferner ein Gaszuführsystem für einen Grossmotor vorgeschlagen, mit welchem mindestens einem Zylinder des Grossmotors ein Gas als Brennstoff zuführbar ist, wobei das Gaszuführsystem eine erste doppelwandige Leitung sowie eine zweite doppelwandige Leitung umfasst, wobei jede Leitung einen inneren Kanal für den gasförmigen Brennstoff umfasst, sowie einen koaxial zum inneren Kanal angeordneten ringförmigen äusseren Kanal für ein zweites Fluid, wobei zwischen der ersten doppelwandigen Leitung und der zweiten doppelwandigen Leitung ein Absperrventil für den gasförmigen Brennstoff vorgesehen ist, und wobei das Absperrventil erfindungsgemäss ausgestaltet ist.

Vorzugsweise weist jede Leitung zumindest an einem ihrer Enden einen Verbindungsflansch auf, um die jeweilige Leitung mit dem Absperrventil zu verbinden.

Dabei ist es insbesondere bevorzugt, dass jeder Verbindungsflansch unlösbar mit der jeweiligen Leitung verbunden ist, beispielsweise durch eine Verschweissung. Durch diese Massnahme werden die Anzahl der benötigten Dichtungselemente sowie die Anzahl der potenziellen Leckagestellen reduziert.

Besonders bevorzugt ist jeder Verbindungsflansch derart ausgestaltet, dass er das Ventilgehäuse umfasst. Somit überlappen sich der Verbindungsflansch und das Ventilgehäuse bezüglich der axialen Richtung, was eine dichte Verbindung zwischen dem Absperrventil und der jeweiligen Leitung ermöglicht.

Gemäss einer bevorzugten Ausführungsform umfasst jeder Verbindungsflansch eine Mehrzahl von Bohrungen, die jeweils so ausgestaltet sind, dass jede Bohrung den äusseren Kanal der Leitung mit einem der zweiten Fluidkanäle des Absperrventils verbindet. Durch diese Massnahme kann das zweite Fluid in besonders einfacher Weise das Absperrventil durchströmen und gegen ein unerwünschtes Austreten des ersten Fluids in die Umgebung schützen.

Dabei ist es insbesondere aus konstruktiven Gründen bevorzugt, dass sich jede Bohrung schräg zur axialen Richtung erstreckt.

Ferner wird durch die Erfindung ein Grossmotor vorgeschlagen, mit mindestens einem Zylinder, wobei ein Gaszuführsystem vorgesehen ist, mit welchem jedem Zylinder ein Gas als Brennstoff zuführbar ist, und wobei das Gaszuführsystem erfindungsgemäss ausgestaltet ist.

In einer bevorzugten Ausführungsform ist der Grossmotor nach Anspruch 14 als längsgespülter Zweitakt-Grossdieselmotor ausgestaltet, vorzugsweise als Dual-Fuel Grossdieselmotor, der in einem Flüssigmodus betreibbar ist, in welchem ein flüssiger Brennstoff zur Verbrennung in den Zylinder eingebracht wird, und der ferner in einem Gasmodus betreibbar ist, in welchem ein Gas als Brennstoff in den Zylinder eingebracht wird.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigen:
- Fig. 1:: einen Schnittdarstellung eines Ausführungsbeispiels eines erfindungsgemässen Absperrventils in einem Schnitt entlang der axialen Richtung,
- Fig. 2:: eine Schnittdarstellung des Ausführungsbeispiels aus Fig. 1 in einem schnitt senkrecht zur axialen Richtung,
- Fig. 3:: einen Schnittdarstellung des Ausführungsbeispiels aus Fig. 1 montiert zwischen zwei Leitungen in einem Schnitt entlang der axialen Richtung,
- Fig. 4:: einen Schnittdarstellung des Ausführungsbeispiels aus Fig. 1 montiert zwischen zwei Leitungen in einem Schnitt senkrecht zur axialen Richtung, und
- Fig. 5:: eine schematische Darstellung eines Ausführungsbeispiels eines erfindungsgemässen Gaszuführsystems in einem Grossmotor.

Mit dem Begriff "Grossmotor" sind solche Motoren gemeint, wie sie üblicherweise als Hauptantriebsaggregate für Schiffe oder auch im stationären Betrieb, z.B. zum Antrieb grosser Generatoren zur Erzeugung elektrischer Energie eingesetzt werden. Typischerweise haben die Zylinder eines Grossdieselmotors jeweils einen Innendurchmesser (Bohrung), der mindestens etwa 200 mm beträgt. Mit dem Begriff "längsgespült" ist gemeint, dass die Spül- oder Ladeluft im Bereich des unteren Endes in den Zylinder eingebracht wird.

Bei der folgenden Beschreibung der Erfindung anhand von Ausführungsbeispielen wird mit beispielhaftem Charakter auf den für die Praxis besonders wichtigen Fall eines Grossmotors Bezug genommen, der als Dual-Fuel Grossdieselmotor ausgestaltet ist, also als ein Motor, der mit zwei unterschiedlichen Brennstoffen betrieben werden kann. Im Speziellen kann dieses Ausführungsbeispiel des Grossdieselmotors in einem Flüssigmodus betrieben werden, in welchem nur ein flüssiger Brennstoff in einen Brennraum eines Zylinders eingespritzt wird. Üblicherweise wird der flüssige Brennstoff, beispielsweise Schweröl oder ein Dieselöl, zu einem geeigneten Zeitpunkt direkt in den Brennraum eingespritzt und entzündet sich dort nach dem Diesel-Prinzip der Selbstzündung. Der Grossdieselmotor kann auch in einem Gasmodus betrieben werden, bei dem ein als Brennstoff dienendes Gas, beispielsweise Erdgas, in Form eines vorgemischten Luft-Brennstoff-Gemisches im Brennraum zur Zündung gebracht wird. Im Speziellen arbeitet der Grossdieselmotor im Gasmodus nach einem Niederdruckverfahren, d.h. das Gas wird im gasförmigen Zustand in den Zylinder eingebracht, wobei der Einspritzdruck des Gases höchstens 50 bar vorzugsweise höchstens 20 bar beträgt. Das Luft-Gas-Gemisch wird im Brennraum nach dem Otto-Prinzip fremdgezündet. Diese Fremdzündung wird üblicherweise dadurch bewirkt, dass zu einem geeigneten Moment eine kleine Menge selbstzündender flüssiger Brennstoff (z. B. Diesel oder Schweröl) in den Brennraum oder in eine Vorkammer eingebracht wird, der sich dann selbst entzündet und dadurch die Fremdzündung des Luft-BrennstoffGemisches im Brennraum verursacht.

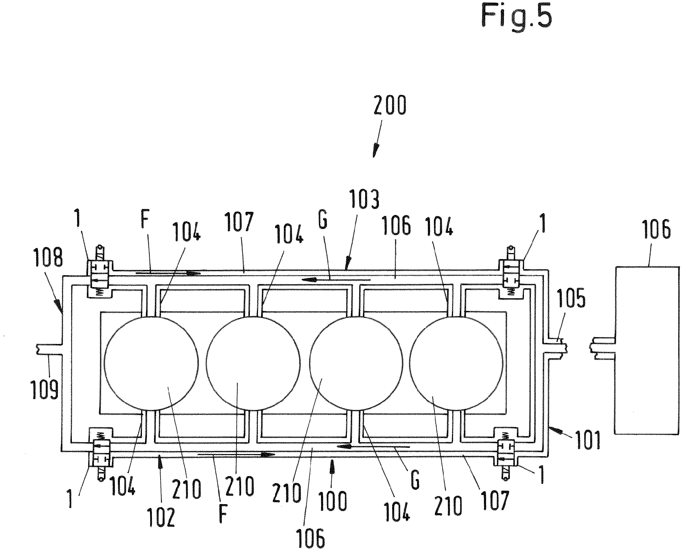

Im Gasmodus benötigt der Grossmotor ein Gas, beispielsweise ein Erdgas als Brennstoff. Dafür wird ein Gaszuführsystem benötigt. Fig. 5 zeigt in einer schematischen Darstellung ein Ausführungsbeispiel eines erfindungsgemässen Gaszuführsystems in dem Grossmotor. Der Grossmotor ist in seiner Gesamtheit mit dem Bezugszeichen 200 bezeichnet und das Gaszuführsystem mit dem Bezugszeichen 100.

Bei den hier beschriebenen Ausführungsbeispielen wird auf einen Grossmotor Bezug genommen, der als längsgespülter Dual-Fuel Zweitakt-Grossdieselmotor ausgestaltet ist.

Der Grossdieselmotor 200 hat mindestens einen, üblicherweise aber eine Mehrzahl von Zylindern 210. In Fig. 5 sind insgesamt vier Zylinder 210 dargestellt. Im Inneren jedes Zylinders ist in an sich bekannter Art ein Kolben (nicht dargestellt) entlang einer Zylinderachse zwischen einem oberen Totpunkt und einem unteren Totpunkt hin und her bewegbar angeordnet. Der Kolben ist in an sich bekannter Weise über eine Kolbenstange (nicht dargestellt) mit einem Kreuzkopf (nicht dargestellt) verbunden, welcher über eine Schubstange (nicht dargestellt) mit einer Kurbelwelle (nicht dargestellt) verbunden ist, sodass die Bewegung des Kolbens über die Kolbenstange, den Kreuzkopf und die Schubstange auf die Kurbelwelle übertragen wird, um diese zu drehen. Die Oberseite des Kolbens begrenzt gemeinsam mit einem Zylinderdeckel (nicht dargestellt) einen Brennraum, in welchen ein Brennstoff für die Verbrennung eingebracht wird. Im Gasmodus ist dieser Brennstoff ein Gas, beispielsweise ein Erdgas wie LNG (Liquefied Natural Gas). Das Gas wird bei einem Niederdruckverfahren beispielsweise durch die zylindrische Wandfläche des jeweiligen Zylinders 210 bzw. durch den Zylinderliner in den Zylinder 210 eingebracht, vorzugsweise etwa in der Mitte zwischen dem oberen und dem unteren Totpunkt des Kolbens. Im Zylinder 210 vermischt sich das Gas bei der Kompressionsbewegung des Kolbens mit der Spülluft und bildet somit ein zündfähiges Luft-Brennstoffgemisch, welches dann fremdgezündet wird, wenn sich der Kolben ungefähr im oberen Totpunkt befindet. Die Fremdzündung erfolgt vorzugsweise mittels der Einspritzung eines selbstzündenden Brennstoffs, z.B. Schweröl oder ein Dieselkraftstoff, in eine Vorkammer des jeweiligen Zylinders.

Wie dies in Fig. 5 dargestellt ist, sind für jeden Zylinder 210 jeweils zwei Gaszuführleitungen 104 vorgesehen, von denen jede zu einer Gaseinlassdüse (nicht explizit dargestellt) am Zylinder 210 bzw. am Zylinderliner führt. Die beiden Gaseinlassdüsen jedes Zylinders 210 liegen sich vorzugsweise diametral gegenüber. Die Gaszuführleitungen 104 zweigen von einer zweiten bzw. dritten Leitung 102 bzw. 103 ab, die als Hauptleitungen ausgestaltet sind, um das Gas zu den Zylindern 210 zu führen. Von der darstellungsgemäss oberen Leitung, nämlich der dritten Leitung 103, zweigt zu jedem Zylinder 210 jeweils eine der Gaszuführleitungen 104 ab, und von der darstellungsgemäss unteren Leitung, nämlich der zweiten Leitung 102, zweigt auch jeweils zu jedem Zylinder 210 eine der Gaszuführleitungen 104 ab. An beiden Enden der zweiten Leitung 102 und an beiden Enden der dritten Leitung 103 ist jeweils ein Absperrventil 1 vorgesehen, das weiter hinten noch näher beschrieben wird. Jedes Absperrventil 1 hat eine Schliessstellung und eine Offenstellung. Ist das Absperrventil 1 in der Offenstellung so kann das Gas - oder allgemeiner ein erstes Fluid - das Absperrventil 1 durchströmen. Ist das Absperrventil 1 in der Schliessstellung, so ist der Durchgang durch das Absperrventil 1 für das Gas bzw. das erste Fluid versperrt.

Darstellungsgemäss rechts der beiden Absperrventile 1, welche am darstellungsgemäss rechten Ende der zweiten Leitung 102 und der dritten Leitung 103 angeordnet sind, ist eine erste Leitung 101 vorgesehen, welche diese beiden Absperrventile 1 miteinander verbindet. An der ersten Leitung 101 ist ein Gaseinlass 105 vorgesehen, durch welchen das Gas von einer Gasversorgungseinheit 106 in die erste Leitung 101 eingespeist werden kann. Die nicht weiter im Detail dargestellte Gasversorgungseinheit 106 umfasst in an sich bekannter Weise zumindest einen Vorratsbehälter für das als Brennstoff verwendete Gas sowie eine Gasdruckkontrollvorrichtung, um den Druck des als Brennstoff verwendeten Gases einzustellen bzw. zu kontrollieren.

Jede der Gaszuführleitungen 104, die erste Leitung 101, die zweite Leitung 102 und die dritte Leitung 103 sind jeweils als doppelwandige Leitung ausgestaltet, welche einen inneren Kanal 106 aufweist durch welchen das als Brennstoff verwendete Gas strömt, sowie einen äusseren Kanal 107 für ein zweites Fluid, welches als Schutzmedium dient. Dieses zweite Fluid ist beispielsweise Luft. Der äussere Kanal 107 ist jeweils als ringförmiger Kanal ausgestaltet und koaxial zum inneren Kanal 106 angeordnet.

Darstellungsgemäss links der beiden Absperrventile 1, welche am darstellungsgemäss linken Ende der zweiten Leitung 102 und der dritten Leitung 103 angeordnet sind, ist eine Spülleitung 108 vorgesehen, welche diese beiden Absperrventile 1 miteinander verbindet. An der Spülleitung 108 ist ein Auslass 109 vorgesehen, durch welchen ein Fluid aus der Spülleitung 108 abgeführt werden kann. Die Spülleitung 108 wird für den normalen Gasbetrieb des Grossmotors 200 nicht benötigt, das heisst im normalen Betrieb sind die beiden darstellungsgemäss linken Absperrventile 1 jeweils in der Schliessstellung. Für Reinigungs- oder Instandhaltungsarbeiten können diese beiden Absperrventile 1 geöffnet werden, sodass ein Fluid, beispielsweise ein Reinigungsmittel, durch die inneren Kanäle 106 geführt werden und über die Spülleitung 108 sowie den Auslass 109 abgeführt werden kann. Da die Spülleitung 108 für den normalen Gasbetrieb nicht benötigt wird, ist sie vorzugsweise nur als einwandige Leitung ausgestaltet.

Während des Betriebs des Grossmotors 200 im Gasmodus sind die beiden darstellungsgemäss linken Absperrventile 1 geschlossen und die beiden darstellungsgemäss rechten Absperrventile 1 sind geöffnet. Das als Brennstoff verwendete Gas wird dann von der Gasversorgungseinheit 106 über den Gaseinlass 105 in den inneren Kanal 106 der ersten Leitung 101 eingebracht und strömt von dort durch die inneren Kanäle 106 der zweiten bzw. dritten Leitung 102 bzw. 103 und der Gaszuführleitungen 104 zu den Gaseinlassdüsen an den Zylindern 210 wie dies durch die Pfeile mit dem Bezugszeichen G in Fig. 5 dargestellt ist.

Gleichzeitig wird ein zweites Fluid als Schutzmedium durch die äusseren Kanäle 107 der Gaszuführleitungen 104, der zweiten Leitung 102, der dritten Leitung 103 und der ersten Leitung 101 geführt, um im Falle einer Leckage ein Austreten des Gases in die Umwelt zu verhindern. Vorzugsweise wird das Schutzmedium im Gegenstrom durch die äusseren Kanäle 107 geführt wie dies durch die Pfeile mit dem Bezugszeichen F in Fig. 5 dargestellt ist. Das heisst, das Schutzmedium strömt in entgegengesetzter Richtung wie das Gas. Ferner ist der Druck des Schutzmediums in den äusseren Kanälen 107 so eingestellt, dass er kleiner ist als der Druck des Gases in den inneren Kanälen 106. Das als Schutzmedium dienende zweite Medium ist vorzugsweise Luft.

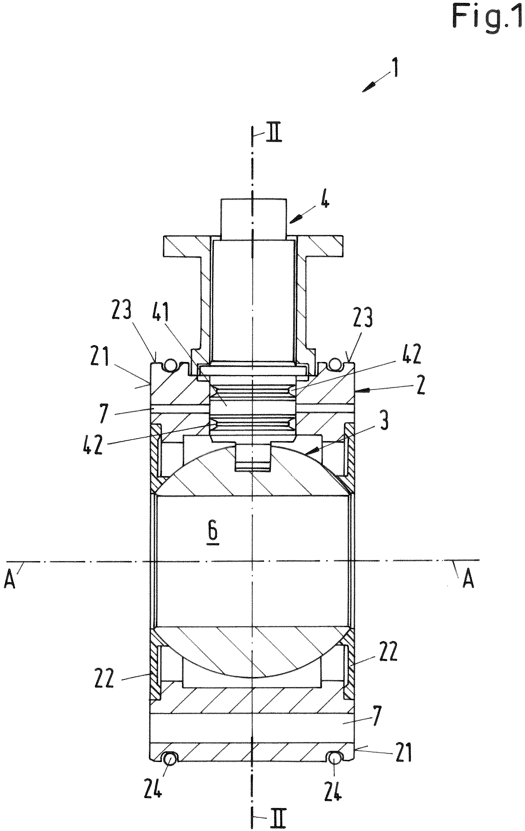

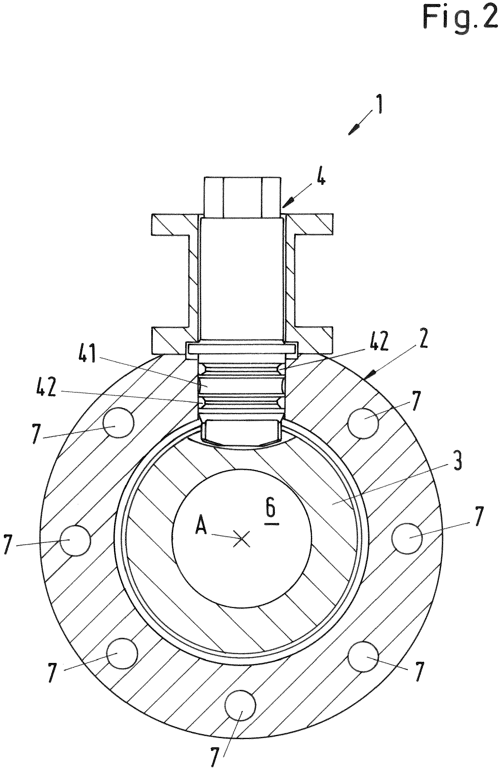

Im Folgenden wird nun anhand eines Ausführungsbeispiels ein erfindungsgemässes Absperrventil 1 näher erläutert. Fig. 1 zeigt in einer Schnittdarstellung ein Ausführungsbeispiel eines erfindungsgemässen Absperrventils 1 für eine doppelwandige Leitung 101, 102, 103, 104. Dabei erfolgt der Schnitt entlang einer axialen Richtung A, welche derjenigen Richtung entspricht, in der das erste Fluid - hier also das als Brennstoff dienende Gas - das Absperrventil 1 in seiner Offenstellung durchströmt. Zum besseren Verständnis zeigt Fig. 2 noch eine Schnittdarstellung dieses Ausführungsbeispiels in einem Schnitt senkrecht zur axialen Richtung A entlang der Schnittlinie II-II in Fig. 1. Eine zur axialen Richtung A senkrechte Richtung wird im Folgenden als radiale Richtung bezeichnet.

Das Absperrventil 1 umfasst ein Ventilgehäuse 2 mit einem zentral angeordneten ersten Fluidkanal 6 für das erste Fluid, hier also beispielsweise das als Brennstoff dienende Gas. Der erste Fluidkanal 6 erstreckt sich in axialer Richtung A vollkommen durch das Ventilgehäuse 2 hindurch. Ferner ist ein Ventilkörper 3 vorgesehen, der hier kugelförmig ausgestaltet ist. Wie das bei einem Kugelventil üblich ist, hat der kugelförmige Ventilkörper 3 eine zentrale Bohrung, die sich diametral durch den Ventilkörper hindurch erstreckt. Wenn das Absperrventil in der Offenstellung ist, die in Fig. 1 und Fig. 2 dargestellt ist, so ist die Bohrung in dem Ventilkörper 3 in axialer Richtung A ausgerichtet, sodass der erste Fluidkanal 6 geöffnet ist und das Absperrventil 1 von dem ersten Fluid durchströmt werden kann. Um das Absperrventil aus der Offenstellung in die Schliessstellung zu bringen, wird der Ventilkörper 3 um 90° gedreht, sodass die Bohrung in dem Ventilkörper 3 senkrecht zur axialen Richtung A ausgerichtet ist. In dieser Schliessstellung sperrt der Ventilkörper 3 den Durchgang durch den ersten Fluidkanal 6, sodass das erste Fluid das Absperrventil 1 nicht mehr durchströmen kann.

Um den Ventilkörper 3 zu drehen, also um das Absperrventil 1 von der Schliessstellung in die Offenstellung zu bringen oder umgekehrt, weist das Absperrventil ein Betätigungsorgan 4 auf, welches in an sich bekannter Weise stabförmig und mit einem kreisförmigen Querschnitt ausgebildet ist. Das Betätigungsorgan 4 greift mit einem seiner Enden in eine Ausnehmung im Ventilkörper 3 ein und erstreckt sich von dort senkrecht zur axialen Richtung A durch das Ventilgehäuse 2 hindurch bis zu seinem zweiten Ende, das ausserhalb des Ventilgehäuses 2 angeordnet ist. Das Betätigungsorgan 4 ist drehbar um seine Längsachse angeordnet, die senkrecht zur axialen Richtung A liegt. Durch ein Drehen des Betätigungsorgans 4 um seine Längsachse kann somit das Absperrventil 1 aus der Schliessstellung in die Offenstellung gebracht werden oder aus der Offenstellung in die Schliessstellung. Das Drehen des Betätigungsorgans 4 kann händisch erfolgen oder es ist ein Antrieb vorgesehen, beispielsweise ein elektrischer oder ein hydraulischer oder ein pneumatischer Antrieb, um das Betätigungsorgan 4 zu drehen.

Das Absperrventil weist ferner eine Mehrzahl von zweiten Fluidkanälen 7 für ein zweites Fluid auf, hier also beispielsweise das Schutzmedium, durch welche das zweite Fluid das Absperrventil 1 durchströmen kann, und zwar unabhängig davon, ob das Absperrventil 1 in der Offenstellung oder in der Schliessstellung ist. Jeder zweite Fluidkanal 7 ist als eine Bohrung im Ventilkörper 2 ausgestaltet. Jeder zweite Fluidkanal 7 ist bezüglich der radialen Richtung weiter aussen angeordnet als der erste Fluidkanal 6. Bei dem hier beschriebenen Ausführungsbeispiel sind insgesamt acht zweite Fluidkanäle 7 vorgesehen, die um den ersten Fluidkanal 6 herum angeordnet sind. Wie das insbesondere in Fig. 2 zu erkennen ist, sind die zweiten Fluidkanäle 7 auf einem Kreis um den ersten Fluidkanal 6 herum angeordnet, wobei dieser Kreis konzentrisch mit dem kreisförmigen Querschnitt des ersten Fluidkanals 6 ist und einen grösseren Durchmesser aufweist als der erste Fluidkanal 6. Dadurch sind die zweiten Fluidkanäle 7 durch das massive Material des Ventilgehäuses 2 von dem ersten Fluidkanal 6 getrennt, sodass im störungsfreien Betrieb kein Massenaustausch zwischen dem ersten Fluidkanal 6 und den zweiten Fluidkanälen 7 möglich ist.

Vorzugsweise sind alle zweiten Fluidkanäle 7 parallel zu dem ersten Fluidkanal 6 ausgestaltet und -wie bereits erwähnt- bezüglich der radialen Richtung aussenliegend zum ersten Fluidkanal 6 angeordnet. Somit erstreckt sich jeder zweite Fluidkanal 7 in axialer Richtung A.

Wie das in den Fig. 1 und Fig. 2 zu erkennen ist, wird einer der zweiten Fluidkanäle 7 in radialer Richtung von dem stabförmigen Betätigungsorgan 4 durchstossen, ansonsten sind alle zweiten Fluidkanäle 7 identisch ausgestaltet. Damit auch derjenige zweite Fluidkanal 7, durch welchen hindurch sich das Betätigungsorgan 4 erstreckt, problemlos von dem zweiten Fluid durchströmt werden kann, weist das Betätigungsorgan 4 in seiner äusseren Wandfläche eine ringförmige Nut 41 auf, durch welche das zweite Fluid das Betätigungsorgan 4 umströmen kann. Bezüglich der radialen Richtung ist die ringförmige Nut 41 dort angeordnet, wo das Betätigungsorgan 4 den zweiten Fluidkanal 7 durchdringt.

Darstellungsgemäss (Fig. 1, Fig. 2) oberhalb und unterhalb der ringförmigen Nut 41 ist an dem Betätigungsorgan 4 jeweils eine Dichtung 42 vorgesehen, die beispielsweise jeweils als O-Ring ausgestaltet ist. Die darstellungsgemäss obere Dichtung 42 dichtet zwischen dem zweiten Fluidkanal 7 und der Umgebung, sodass kein Fluid entlang des Betätigungsorgans 4 aus dem zweiten Fluidkanal 7 austreten oder in diesen eindringen kann. Die darstellungsgemäss untere Dichtung 42 dichtet zwischen dem zweiten Fluidkanal 7 und dem ersten Fluidkanal 6, sodass das erste Fluid nicht aus dem ersten Fluidkanal 6 entlang des Ventilkörpers 3 und entlang des Betätigungsorgans 4 in den zweiten Fluidkanal 7 eindringen kann.

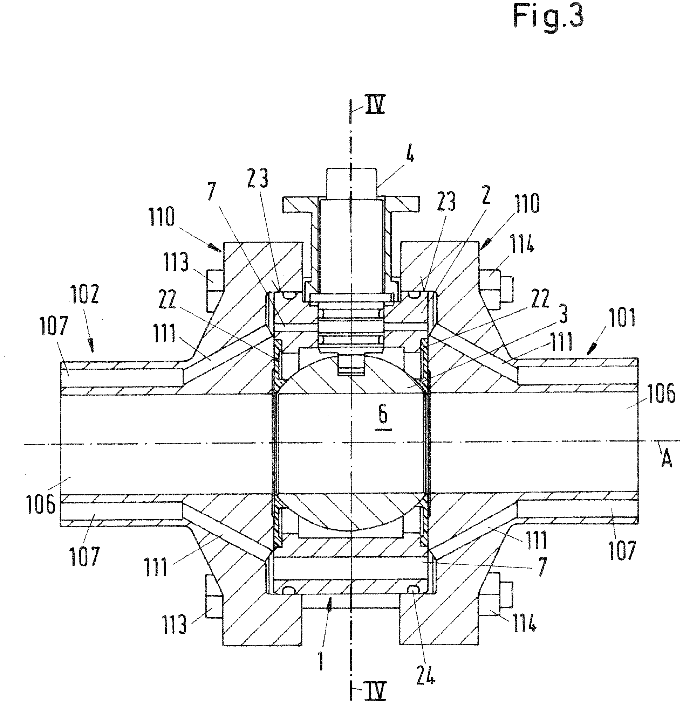

Das Ventilgehäuse 2 weist ferner zwei axiale Endflächen 21 auf, welche das Ventilgehäuse bezüglich der axialen Richtung A begrenzen. In jeder dieser axialen Endflächen 21 ist jeweils ein ringscheibenförmiges Dichtelement 22 vorgesehen, welches im eingebauten Zustand des Absperrventils 1 den ersten Fluidkanal 6 gegenüber den zweiten Fluidkanälen 7 abdichtet (siehe auch Fig. 3). Jedes ringscheibenförmige Dichtelement 22 hat einen inneren Durchmesser, der im Wesentlichen dem Durchmesser des ersten Fluidkanals 6 entspricht, und einen Aussendurchmesser, der kleiner ist als der diametrale Abstand zweier sich gegenüberliegenden zweiten Fluidkanäle 7. Somit endet jedes ringscheibenförmige Dichtelement 22 bezüglich der radialen Richtung zwischen dem ersten Fluidkanal 6 und den zweiten Fluidkanälen 7. Jedes der ringscheibenförmigen Dichtelemente 22 ist in eine entsprechend ausgestaltete Ausnehmung in der jeweiligen axialen Endfläche 21 eingelegt. Mit seiner dem Inneren des Ventilgehäuses 2 zugewandten Seite liegt jedes ringscheibenförmige Dichtelement 22 an dem sphärischen Ventilkörper 3 an.

Das Ventilgehäuse 2 weist ferner zwei ringförmige Mantelflächen 23 auf, auf denen jeweils ein Verbindungsflansch 110 der ersten Leitung 101, der zweiten Leitung 102 oder der dritten Leitung 103 aufliegen kann, sodass der Verbindungsflansch 110 das Ventilgehäuse 2 umfassen kann, wie weiter hinten noch erläutert wird.

Die zwei ringförmigen Mantelflächen 23 sind benachbart zu den axialen Endflächen 21 angeordnet und erstrecken sich jeweils in Umfangsrichtung vollständig um das Ventilgehäuse 2. Das sich in radialer Richtung erstreckende Betätigungsorgan 4 ist so angeordnet, dass es bezüglich der axialen Richtung A zwischen den beiden Mantelflächen 23 aus dem Ventilgehäuse 2 herausragt.

In jeder der Mantelflächen 23 ist jeweils ein ringförmiges Dichtelement 24 vorgesehen, welches sich in Umfangsrichtung vollständig um das Ventilgehäuse 2 herum erstreckt. Jedes Dichtelement 24 dient der Abdichtung zwischen dem Absperrventil 1 und einer Leitung 101, 102, 103, mit welcher das Absperrventil 1 verbunden ist. Jedes ringförmige Dichtelement 24 ist beispielsweise als O-Ring ausgestaltet, welcher beispielsweise in eine Ringnut in der jeweiligen Mantelfläche 23 eingelegt wird.

Fig. 3 zeigt einen Ausschnitt aus einem Ausführungsbeispiel eines erfindungsgemässen Gaszuführsystems 100 für den Grossmotor 200, das beispielsweise wie im Zusammenhang mit Fig. 5 beschrieben ausgestaltet sein kann. Im Speziellen zeigt Fig. 3 das anhand der Fig. 1 und Fig. 2 erläuterte Absperrventil 1 in einem montierten Zustand zwischen der ersten Leitung 101 und der zweiten Leitung 102 des Gaszuführsystems 100.

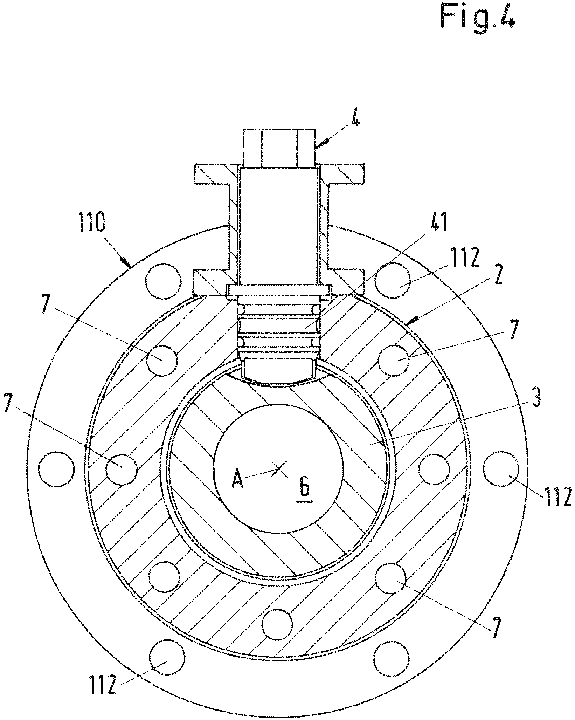

Zum besseren Verständnis ist in Fig. 4 noch eine Schnittdarstellung entlang der Schnittlinie IV-IV in Fig. 3 gezeigt, also ein Schnitt senkrecht zur axialen Richtung A.

Die doppelwandige erste Leitung 101 und die doppelwandige zweite Leitung 102 weisen jeweils zumindest an einem ihrer Enden einen Verbindungsflansch 110 auf, um die erste bzw. zweite Leitung 101, 102 dichtend mit dem Absperrventil 1 zu verbinden.

Jeder Verbindungsflansch 110 ist vorzugsweise unlösbar mit der jeweiligen Leitung 101 bzw. 102 verbunden beispielsweise durch eine Verschweissung. Ferner ist jeder Verbindungsflansch 110 so ausgestaltet, dass er eine der Mantelflächen 23 des Absperrventils 1 umfassen kann. Das heisst, der Verbindungsflansch 110 überlappt mit der Mantelfläche 23 des Absperrventils 1 bezüglich der axialen Richtung A.

Jeder Verbindungsflansch 110 umfasst eine Mehrzahl von Bohrungen 111, die jeweils so ausgestaltet sind, dass jede Bohrung 111 den äusseren Kanal 107 der ersten bzw. zweiten Leitung 101 bzw. 102 mit einem der zweiten Fluidkanäle 7 des Absperrventils 1 verbindet. Folglich ist die Anzahl der Bohrungen 111 in dem Verbindungsflansch 110 gleich der Anzahl der zweiten Fluidkanäle 7 in dem Absperrventil 1. Es ist jedoch nicht zwingend so, dass die Anzahl der zweiten Fluidkanäle 7 gleich der Anzahl der Bohrungen 111 ist. In anderen Ausführungsformen ist es möglich, dass die Anzahl der Bohrungen 111 grösser oder kleiner ist als die Anzahl der zweiten Fluidkanäle 7. Wenn beispielsweise aus geometrischen Gründen im Verbindungsflansch 110nur Bohrungen 111 mit kleiner Querschnittsfläche angebracht werden können, ist es vorteilhaft mehr Bohrungen 111 vorzusehen als zweite Fluidkanäle 7 im Absperrventil vorgesehen sind.

Dazu ist jede Bohrung 111 vorzugsweise schräg zur axialen Richtung A ausgerichtet, sodass jede Bohrung 111 einerseits mit dem äusseren Kanal 107 der ersten Leitung 101 bzw. der zweiten Leitung 102 in Strömungsverbindung steht und andererseits mit einem der zweiten Fluidkanäle 7 des Absperrventils 1. Ferner ist jeder Verbindungsflansch 110 mit einer Mehrzahl von Montagebohrungen 112 (Fig. 4) versehen, welche zur Aufnahme von Verschraubungen ausgestaltet sind.

Falls es die geometrischen Gegebenheiten zulassen, ist es natürlich auch möglich, dass jede Bohrung 111 parallel oder zumindest näherungsweise parallel zur axialen Richtung verläuft.

Um das Absperrventil 1 in das Gaszuführsystem 100 zu integrieren, wird der Verbindungsflansch 110 der ersten Leitung 101 über eine der Mantelflächen 23 des Absperrventils 1 geschoben, und der Verbindungsflansch 110 der zweiten Leitung 102 wird über die andere Mantelfläche 23 des Absperrventils 1 geschoben. Dann wird durch jede der Montagebohrungen 112 eine Schraube oder ein Bolzen 113 geschoben, auf den dann eine Mutter 114 aufgeschraubt wird. Durch Anziehen aller der Muttern 114 wird dann das Absperrventil 1 zwischen der ersten Leitung 101 und der zweiten Leitung 102 dichtend verspannt.

## Patentansprüche

1. Absperrventil für eine doppelwandige Leitung (101, 102, 103) eines Gaszuführsystems (100) mit einem Ventilgehäuse (2), welches einen zentral angeordneten ersten Fluidkanal (6) für ein erstes Fluid aufweist, der sich in einer axialen Richtung (A) vollständig durch das Ventilgehäuse (2) hindurch erstreckt, ferner mit einem Ventilkörper (3), welcher in einer Schliessstellung den Durchgang durch den ersten Fluidkanal (6) versperrt, und welcher in einer Offenstellung den Durchgang durch den ersten Fluidkanal (6) öffnet, sowie mit einem Betätigungsorgan (4), mit welchem der Ventilkörper (3) aus der Schliessstellung in die Offenstellung und aus der Offenstellung in die Schliessstellung bewegbar ist, **dadurch gekennzeichnet, dass** eine Mehrzahl von zweiten Fluidkanälen (7) für ein zweites Fluid vorgesehen ist, durch welche das zweite Fluid das Ventilgehäuse (2) durchströmen kann, wobei jeder zweite Fluidkanal (7) jeweils als Bohrung im Ventilgehäuse (2) ausgestaltet ist.

2. Absperrventil nach Anspruch 1, wobei jeder zweite Fluidkanal (7) parallel zum ersten Fluidkanal (6) verläuft und wobei die zweiten Fluidkanäle (7) radial aussenliegend um den ersten Fluidkanal (6) herum angeordnet sind.

3. Absperrventil nach einem der vorangehenden Ansprüche, wobei das Ventilgehäuse(2) zwei ringförmige Mantelflächen (23) umfasst, auf welchen jeweils ein Verbindungsflansch (110) das Ventilgehäuse (2) umfassen kann.

4. Absperrventil nach Anspruch 3, wobei in jeder Mantelfläche (23) ein Dichtelement (24) angeordnet ist.

5. Absperrventil nach einem der vorangehenden Ansprüche, bei welchem sich das Betätigungsorgan (4) senkrecht zur axialen Richtung (A) erstreckt und in den Ventilkörper (3) eingreift.

6. Absperrventil nach einem der vorangehenden Ansprüche, bei welchem das Betätigungsorgan (4) eine ringförmige Nut (41) umfasst, durch welche das zweite Fluid das Betätigungsorgan (4) umströmen kann.

7. Absperrventil nach einem der vorangehenden Ansprüche, wobei das Ventilgehäuse (2) zwei axiale Endflächen (21) aufweist, und wobei in jeder Endfläche (21) jeweils ein ringscheibenförmiges Dichtelement (22) angeordnet ist, welches den ersten Fluidkanal (6) umgibt, und dessen Aussendurchmesser so bemessen ist, dass das ringscheibenförmige Dichtelement (22) bezüglich der radialen Richtung zwischen dem ersten Fluidkanal (6) und den zweiten Fluidkanälen (7) endet.

8. Gaszuführsystem für einen Grossmotor, mit welchem mindestens einem Zylinder (210)des Grossmotors (200) ein Gas als Brennstoff zuführbar ist, umfassend eine erste doppelwandige Leitung (101) sowie eine zweite doppelwandige Leitung (102), wobei jede Leitung (101, 102) einen inneren Kanal (106) für den gasförmigen Brennstoff umfasst, sowie einen koaxial zum inneren Kanal (106) angeordneten ringförmigen äusseren Kanal (107) für ein zweites Fluid, und wobei zwischen der ersten doppelwandigen Leitung (101) und der zweiten doppelwandigen Leitung (102) ein Absperrventil (1) für den gasförmigen Brennstoff vorgesehen ist, **dadurch gekennzeichnet, dass** das Absperrventil (1) nach einem der vorangehenden Ansprüche ausgestaltet ist.

9. Gaszuführsystem nach Anspruch 8, wobei jede Leitung (101, 102, 103) zumindest an einem ihrer Enden einen Verbindungsflansch (110) aufweist, um die jeweilige Leitung (101, 102, 103) mit dem Absperrventil (1) zu verbinden.

10. Gaszuführsystem nach Anspruch 9, wobei jeder Verbindungsflansch (110) unlösbar mit der jeweiligen Leitung (101, 102, 103) verbunden ist.

11. Gaszuführsystem nach einem der Ansprüche 9-10, wobei jeder Verbindungsflansch (110) derart ausgestaltet ist, dass er das Ventilgehäuse (2) umfasst.

12. Gaszuführsystem nach einem der Ansprüche 9-11, wobei jeder Verbindungsflansch (110) eine Mehrzahl von Bohrungen (111) umfasst, die jeweils so ausgestaltet sind, dass jede Bohrung (111) den äusseren Kanal (107) der Leitung (101, 102, 103) mit einem der zweiten Fluidkanäle (7) des Absperrventils (1) verbindet.

13. Gaszuführsystem nach Anspruch 12, wobei sich jede Bohrung (111) schräg zur axialen Richtung (A) erstreckt.

14. Grossmotor mit mindestens einem Zylinder, wobei ein Gaszuführsystem (100) vorgesehen ist, mit welchem jedem Zylinder (210) ein Gas als Brennstoff zuführbar ist, **dadurch gekennzeichnet, dass** das Gaszuführsystem (100) nach einem der Ansprüche 8-13 ausgestaltet ist.

15. Grossmotor nach Anspruch 14 ausgestaltet als längsgespülter Zweitakt-Grossdieselmotor, vorzugsweise als Dual-Fuel Grossdieselmotor, der in einem Flüssigmodus betreibbar ist, in welchem ein flüssiger Brennstoff zur Verbrennung in den Zylinder (210) eingebracht wird, und der ferner in einem Gasmodus betreibbar ist, in welchem ein Gas als Brennstoff in den Zylinder (210) eingebracht wird.
